# EUROPEAN PATENT APPLICATION

(11) **EP 4 339 031 A1**
(43) Date of publication of application: **20.03.2024**
(21) Application number: 23183648.7
(22) Date of filing: 05.07.2023
(51) Int. Cl.: B60R 5/04, A45C 3/04, A45C 7/00, A45C 13/04, B60R 7/02

(54) **DEVICE FOR RETAINING ONE OR MORE ITEMS IN A COMPARTMENT OF A MOTORIZED VEHICLE**

(30) Priority: 16.09.2022 CH 1078202022
(71) Applicant: HÖIN, Josef, 6600 Muralto (CH)
(72) Inventor: HÖIN, Josef, 6600 Muralto (CH)
(74) Representative: M. Zardi & Co S.A.

(57) **Abstract**

Retaining device (1) comprising:
(a) a device base (2) comprising a first surface (4) and a second surface (6), said first surface (4) and said second surface (6) being separated through a thickness (8) of said device base (2);
(b) a retaining element (10), fixed to the device base (2) movably between a first position in which the retaining element (10) is in the proximity of, or in contact with, the second surface (6), and at least one second position in which the retaining element (10) is at least partly spaced from the device base (2);
wherein the retaining element (1) delimits with the device base (2) a space (12) for receiving one or more items and - in the second position - delimits with the device base (2) an opening (14) for placing said one or more items on the second surface (6);
(c) means for returning the retaining element (10) from the second position towards the first position by means of an elastic force and/or weight force.

## Description

### Field of the invention

The invention falls within the sector of accessories for motorized vehicles and, in particular, relates to a device for retaining one or more items in a compartment of a motorized vehicle.

### Prior art

It is known that the ability for shopping bags to remain in a vertical or erect position, with their filling opening directed upwards, depends, among other things, on the way in which products contained in said bags are arranged inside them. By way of example, the arrangement, on the bottom of the bags, of products which have a flat and relatively wide base or products which are fairly heavy is able to partly stabilize the shopping bags and therefore reduce the risk that the products contained inside them may come out.

However, whenever the bags are filled, products with a different geometrical shape and weight will be present so that it is not always the case that there will be products suitable for ensuring a greater stability of the shopping bags.

Moreover, external factors may also influence a loss of vertical or erect position of the shopping bag, in particular during transportation in a motorized vehicle (for example in a motorcar): a movement of the vehicle results in a series of forces or stresses on the shopping bags transported in the vehicle - for example when accelerating, decelerating, travelling around bends, going up and/or down hills - which could tilt, tip over or overturn these bags depending on the magnitude of said force or stress, or depending on a combination of forces or stresses.

The possibility of bags being tilted, tipped over or overturning is something which is not only inconvenient (since the products which have fallen out must be placed back inside the shopping bags), but could also have other negative consequences.

According to a first example, the products, when they fall inside and/or hit against the boot of the motorized vehicle, could distract the vehicle driver and therefore could be a cause of road accidents.

According to a second example, the products themselves could be damaged when they fall and/or are knocked over or could be damaged by collisions with other products or crushed by them.

According to a third example, the products could be liquid containers and these liquids (for example corrosive products, oils, cleaning agents, wine, etc.) could leak from their containers when they are arranged in a horizonal position and spill out inside the compartment inside which the shopping bags are placed. These liquids could damage other products or objects present inside the compartment, leave pungent or unpleasant lingering odours, or could irreparably damage or stain the internal surfaces of the vehicle.

The possibility of the shopping bags being tilted, tipped over or overturned is therefore not just potentially inconvenient or bothersome, but could also have costly consequences due to road accidents, damaging of one or more products, or spillage of liquids inside the compartment of the motorized vehicle.

In order to prevent or limit the possibility of such events occurring, it has been proposed to use elastic nets which can be tensioned above the shopping bags after the bags have been placed inside the compartment.

However, the use of elastic nets is not satisfactory since it means that the motorized vehicle must have been factory-designed for this purpose with the provision inside the compartment of eyelets or hooks for fixing and then tensioning the elastic net or, if it is not factory-designed, then the motorized vehicle must be modified in a workshop and fitted with eyelets or hooks for fixing the net.

Furthermore, the fixing of the elastic net and the setting of the correct tension thereof (sufficiently strong to retain the products, but not crush them to the point of damaging them) are operations which are more or less time-consuming depending on the skill of the person carrying out said operations (user).

The present invention therefore relates to a device and an assembly which are able to overcome the drawbacks arising from the prior art.

In particular, the device according to the present invention is able to receive and retain one or more items so as to ensure that they remain in a predefined position inside the device. Differently from the devices of the prior art, with the retaining device according to the present invention the motorized vehicle does not have to be factory-designed for this purpose or undergo modifications in a workshop. Furthermore, the use of the device according to the present invention is independent of the individual skills of the user.

### Summary of the invention

The object of the invention is to overcome the aforementioned drawbacks of the prior art. In particular, the invention reduces the risk that one or more items may tilt, tip over, be overturned, fall inside and/or hit against a compartment of a motorized vehicle. In this way, inconvenience, costly consequences and damage are avoided.

The aforementioned objects are achieved by means of a retaining device according to claim 1.

In the present invention, the retaining device comprises: (a) a device base comprising a first surface and a second surface, said first surface and said second surface being separated through a thickness of said device base; a retaining element, fixed to the device base movably (preferably rotatably) between a first position in which the retaining element is in the proximity of, or in contact with, the second surface, and at least one second position in which the retaining element is at least partially spaced from the device base; and (c) means for returning the retaining element from the second position towards the first position by means of an elastic force and/or weight force. The retaining element delimits with the device base a space for receiving one or more items and - in the second position - delimits with the device base an opening for placing said one or more items on the second surface.

In this description "at least partially spaced" means that the retaining element may be only partially spaced or completely spaced from the device base.

The present invention also relates to an assembly comprising the retaining device according to any one of the embodiments described herein.

More precisely, said assembly comprises a motorized vehicle which comprises a bottom surface which delimits at the bottom a vehicle compartment; and said retaining device placed in the vehicle compartment with the first surface resting on the bottom surface.

The invention has the advantages listed below.

Advantageously, the retaining device in its simplest embodiment is rotatable about only one rotation axis and is therefore constructionally more essential, but suitable for retaining objects which do not extend significantly heightwise.

Advantageously, the retaining device in its more complex embodiment is rotatable about two axes of rotation and therefore offers greater versatility of use for positioning both small items and large items.

Advantageously, the pair of movement levers has a synchronized movement and provides a suitably precise movement of the retaining element.

Advantageously, a substantially horizontal device base is able to maximize both the stability of the retaining device and the efficiency of the returning means.

Advantageously, the retaining device according to the present invention comprises a softer and lighter portion intended to come into contact with said one or more items, and a more rigid and solidly constructed portion configured to ensure that the first position is reliably maintained.

Advantageously, the presence of a loosely arranged fabric or meshwork allows said one or more items to be surrounded and wrapped also laterally and at the top with respect to the device base, thus forming a kind of containing cover which, in the first position, extends so as to cover the items or plurality of items.

Advantageously, the fabric or the meshwork are at least partially transparent to light so that the item or items placed in the receiving space can be seen or are partially visible.

Advantageously, the retaining device according to the present invention has been designed to withstand accidental movements of the device base. In this way the possibility that the device base may move in an uncontrolled manner and damage the contents of the receiving space is reduced.

Advantageously, the retaining device according to the present invention is constructionally simple and is designed to contain said one or more items, even without the presence of lateral border edges connected and extending from the device base.

Advantageously, the retaining device according to the present invention may assume an expanded or three-dimensional position such as to ensure adequate opening of the aperture for placing the items and therefore good accessibility to the receiving space.

Advantageously, the retaining device according to the present invention may assume a flattened and space-saving position. As a result of this feature most of the space inside the vehicle compartment is left free for the arrangement of other objects, such as suitcases, when this device is not used.

Advantageously, the retaining device is compression resistant.

In this description "compression resistant" means that the device has a structure and is formed by materials which may be compressed or squashed by other objects, such as suitcases, without being damaged and without said compression or squashing forces resulting in faulty functioning thereof.

Advantageously, the retaining device according to the present invention may be extracted from, or placed inside, the vehicle compartment so as to satisfy different circumstances or needs.

Advantageously, the retaining device according to the present invention may be removed from the vehicle compartment very simply owing to its easy arrangement on the bottom surface.

### Preferred embodiments

Preferably, the returning means are configured to constantly force the retaining element from the second position towards the first position by means of said elastic force and/or said weight force.

In accordance with embodiments of the device, the returning means are mechanically arranged between the retaining element and the device base so as to exert - preferably by means of a traction - said elastic force; and/or the returning means comprise at least part of the weight force of the retaining element.

In accordance with another embodiment of the device, the retaining element is fixed to the device base rotatably about at least one rotation axis R1; R2, R2, between said first position and said second position.

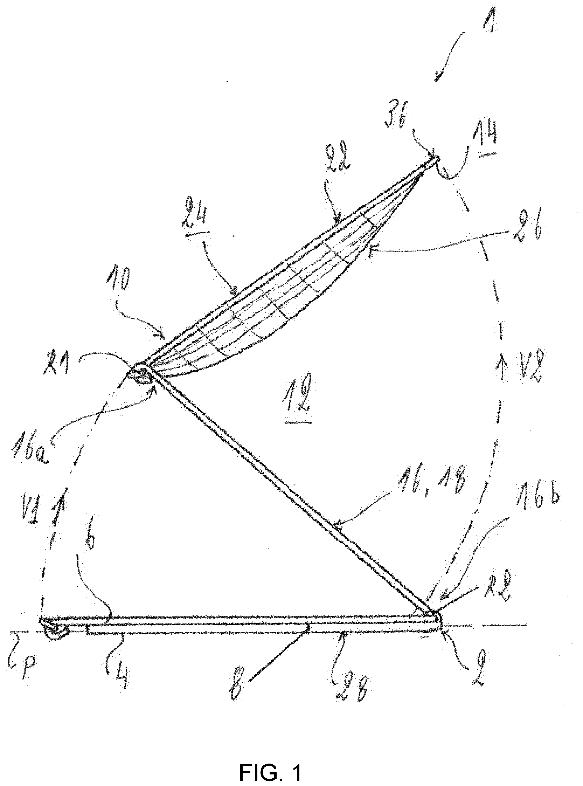

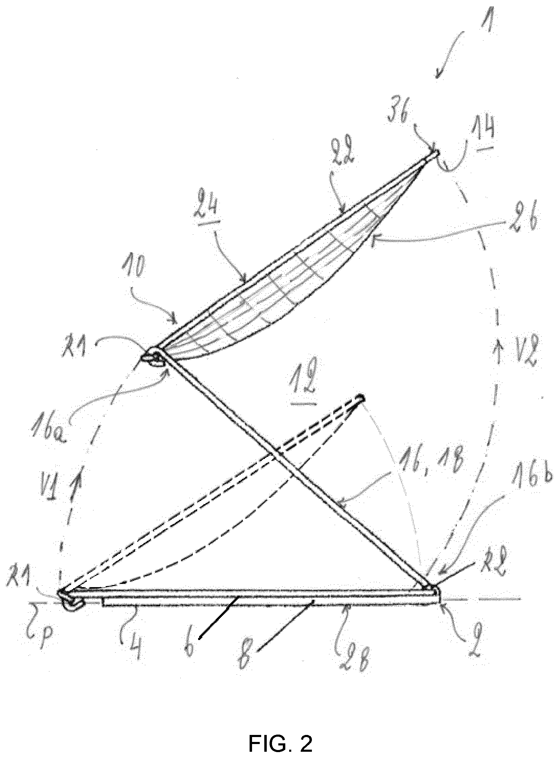

Preferably, the retaining element is hinged with the device base about a single rotation axis R1 (see, for example, Fig. 2), or the retaining device comprises at least one movement lever hinged at a first end with the retaining element about a first rotation axis R1 and hinged at a second end, opposite to the first end, with the device base about a second rotation axis R2 (see, for example, Fig. 1).

More preferably, the retaining element comprises a pair of movement levers located at opposite ends of the retaining element and mechanically joined together so as to form a movement fork.

Even more preferably, a straight section of the movement fork extending between the pair of movement levers is rotatable about the second rotation axis R2. By way of example, the retaining device comprises strips of material fixed to the second surface and folded (preferably hingeably onto themselves) so as accommodate at least partly the movement fork and in this way guide the rotation about said second rotation axis R2. Preferably, each strip of material is fixed to the second surface by means of mechanical fixing means, such as a screw or a rivet.

In accordance with one embodiment of the device, the device base comprises or consists of a layer or thin mattress of polymer material, preferably rubber.

Preferably, the device base and/or the retaining element have a polygonal - for example square or rectangular - shape in plan view.

In accordance with another embodiment of the device, the device base extends in a substantially horizontal plane P.

In accordance with a further embodiment of the device, the retaining element is movable along a direction perpendicular to the substantially horizontal plane P.

In accordance with a yet further embodiment of the device, the retaining element comprises a frame or a surrounding border which circumscribes at least partly an internal recess, and a fabric or meshwork connected to the frame or the surrounding border so as to extend at least partly (for example: completely) across the internal recess.

Preferably, the frame or surrounding border form a closed loop or are generally U-shaped so as to leave the internal recess open on one side.

Optionally, the frame or surrounding border are shaped so as to form at least one gripping portion (for example a gripping handle), preferably projecting from an edge of the frame or surrounding border.

More preferably, the fabric or meshwork is loosely arranged (i.e. not tensioned) so as to hang at least partially outside of the internal recess when the retaining element 10 is in the second position. See, for example, Fig. 1 or Fig. 2.

In accordance with a preferred embodiment of the device, at least part of the first surface comprises non-slip means chosen from the group consists of: alternating surface peaks and troughs, a plurality of hooks or mini-hooks, at least one releasable adhesive substance, an electrostatic charge, one or more suction cups, one or more materials with a sufficiently high static coefficient of friction, and combinations thereof.

Preferably, the device base is devoid of shoulders which laterally delimit the receiving space.

In accordance with a preferred embodiment of the device, the first position of the retaining element is a flattened or two-dimensional position and the second position of the retaining element is an expanded or three-dimensional position.

In accordance with one embodiment of the assembly, the retaining device can be extracted from the vehicle compartment.

In accordance with another embodiment of the assembly, the vehicle compartment is a luggage compartment.

In accordance with a further embodiment of the assembly, the non-slip means of the first surface act or work on the bottom surface, namely they exert their non-slip function with respect to the bottom surface by preventing or limiting a relative movement of the first surface and the bottom surface.

Preferably, the hooks or mini-hooks are engaged with the bottom surface.

More preferably, the hooks or mini-hooks are a male component of a Velcro system, the bottom surface being provided with a plurality of loops or mini-loops for forming the female component, corresponding to said male component, of the Velcro system.

The advantages of the invention will emerge even more clearly from the detailed description given below based on the attached figures provided by way of example and therefore of a non-limiting nature.

### Description of the figures

Fig. 1 shows a side view of a first embodiment of the retaining device according to the present invention, where the retaining element is arranged in a second position;
Fig. 2 shows a side view of the retaining device according to Fig. 1, where the retaining element shown in broken lines is arranged in a different second position by means of rotation only about the first rotation axis R1 (and not about the second rotation axis R2);
Fig. 3 shows a side view of a second embodiment of the retaining device according to the present invention, where the retaining element is arranged in a second position;
Fig. 4 shows a plan view of the retaining device according to Fig. 1 or Fig. 2, where the retaining element is arranged in a first position.

### Detailed description of the device according to a preferred embodiment

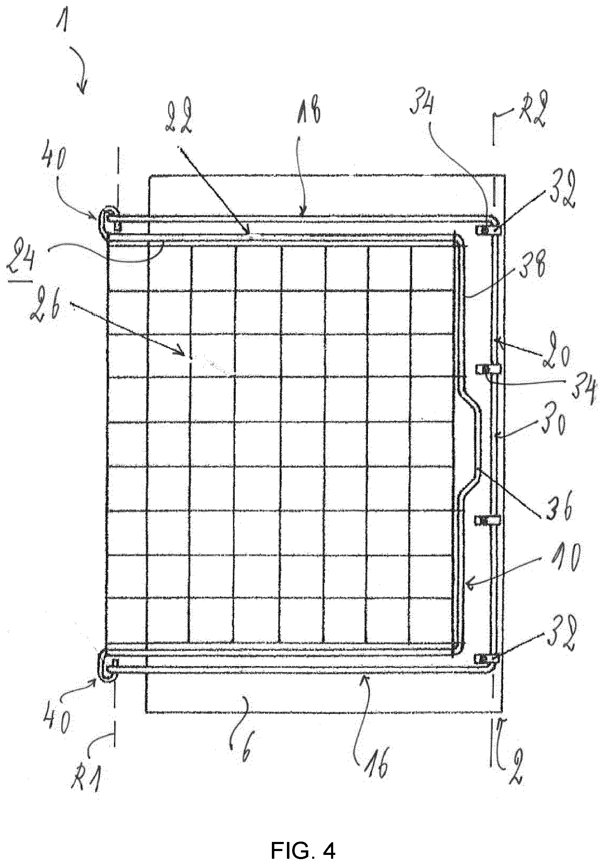

Fig. 4 shows a (top) plan view of a retaining device 1 according to a preferred embodiment of the present invention.

The retaining device 1 comprises a device base, a retaining element 10 and returning means. In Fig. 4 the retaining element is in a first position. The retaining element 10 delimits a receiving space 12 for one or more items with the device base 2.

The device base 2 comprises a first surface 4 and a second surface 6, the first surface 4 and the second surface 6 being separated through a thickness 8 of the device base 2. In the view shown in Fig. 4, the first surface 4 is concealed since it faces downwards underneath the device base 2. In this embodiment, the device base has a substantially rectangular shape in plan view.

The retaining element 10 shown in Fig. 4 comprises a U-shaped frame 22 which circumscribes partly an internal recess 24 and comprises a meshwork 26 connected to the frame 22 so as to extend over the internal recess 24. The meshwork is loosely arranged (i.e. not tensioned) so as to hang at least partially outside of the internal recess 24 when the retaining element 10 is in a second position. The frame 22 is shaped so as to form at least one gripping portion so as to allow a user to move the retaining element 10 towards the second position.

The retaining element 10 is connected to the device base 2 by means of a movement fork 20.

The movement fork 20 comprises a pair of movement levers 16, 18 and a straight section 30 connected and extending between said pair of movement levers 16, 18. Each movement lever 16, 18 is hinged at a first end 16a with the retaining element 10 about a first rotation axis R1 and is hinged - by means of the straight section 30 - at a second end 16b, opposite to the first end 16a, to the device base 2 about a second rotation axis R2.

Strips of material 32, fixed to the second surface 6 and folded over onto themselves, partly accommodate the movement fork 20 and thus guide the rotation thereof about the second rotation axis R2. These strips of material 32 therefore form hinges for the rotation of the movement fork 20 about the second rotation axis R2. Each strip of material 32 is fixed to the second surface 6 by means of a rivet or a screw.

The rotation of the retaining element 10 about the first rotation axis R1 is performed by a pair of articulations 40 arranged at the first end 16a of each movement lever 16, 18.

By way of example, each articulation 40 is formed by means of folded annular terminal portions of the movement lever 16, 18 and the frame 22. The folding planes of the folded terminal portions of the movement lever 16, 18 and the frame 22 are arranged at 90° with respect to each other. Each folded terminal portion of the movement lever 16, 18 is partly accommodated inside a space formed by a folded terminal portion of the frame 22 and, similarly, each folded terminal portion of the frame 22 is accommodated inside a space formed by a folded terminal portion of the movement lever 16, 18.

Fig. 1, Fig. 2 and Fig. 3 show conditions where the retaining element 10 is moved towards second positions.

With reference to Fig. 1, with regard to the first position the retaining element 10 is completely spaced from the device base 2. The movement fork 20, having performed a rotation in a first direction V1 of about 30°-45° about the second rotation axis R2, is inclined upwards.

The retaining element 10, having performed a rotation in a second direction V2 (opposite to the first direction V1) of about 30°-45° about the first rotation axis R1, is in turn inclined upwards, being partly spaced from the movement fork 20.

The retaining element 10 shown in broken lines in Fig. 2 differs from the retaining element 10 of Fig. 1 in that it rotates only about the first rotation axis R1 without rotating about the second rotation axis R2. The movement fork 20 is therefore present in Fig. 2, but is not used for the purposes of rotation about the second rotation axis R2. The retaining element 10 is therefore only partly spaced from the device base 2, since one side of the frame 22 - along the first rotation axis R1 - remains steady in the proximity of the device base 2 without being raised. The retaining element 10, having performed a rotation in an anti-clockwise direction V2 of about 30°-45° about the first rotation axis R1, is inclined upwards being spaced only partly from the device base 2.

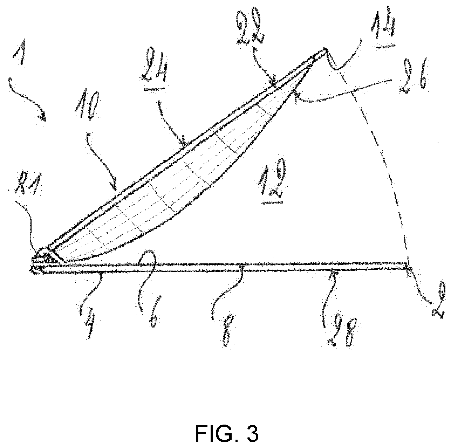

Lastly, the retaining element 10 shown in Fig. 3 differs from the retaining element 10 shown in broken lines in Fig. 2 in that it rotates only about the first rotation axis R1 and does not have a movement fork 20. In this embodiment also, the retaining element 10 is therefore only partly spaced from the device base 2, since the side of the frame 22 along the first rotation axis R1 remains close to the device base 2 (without being able to be raised owing to the absence of a second rotation axis R2). The retaining element 10, having performed a rotation in an anti-clockwise direction of about 30°-45° about the first rotation axis R1, is inclined upwards being spaced partly from the device base 2.

In the second position, the retaining element 10 delimits with the device base 2 an opening 14 for placing said one or more items on the second surface 6. In the layout shown in Fig. 1, Fig. 2 and Fig. 3, the access 14 for placing the items is open on the right-hand side. In this position, one or more items may be introduced into the receiving space 12 and placed on the second surface 6.

In the embodiments in which the retaining element 10 rotates only about the first rotation axis R1, the opening 14 for placing the items will be smaller (narrower) than in the embodiments in which the retaining element 10 rotates only about the first rotation axis R1 and about the second rotation axis R2.

When the user releases the retaining element 10, said element returns spontaneously towards the first position under the action of the returning means. The movement of the retaining element 10, and optionally of the movement fork 20, is repeated in the opposite manner to that described above.

When the first position is reached again, the frame 22 comes into contact with the second surface 6. In this condition the meshwork 26 rests and preferably receives the item or the items placed on the second surface 6, forming a containing cover which extends so as to cover and retain the item or plurality of items.

### LIST OF REFERENCE NUMBERS

- 1: retaining device
- 2: device base
- 4: first surface, preferably bottom or locating surface
- 6: second surface, preferably top or supporting surface
- 8: thickness
- 10: retaining element
- 12: receiving space
- 14: opening - preferably lateral opening - for placing the items
- 16: movement lever
- 16a: first end of the movement lever
- 16b: second end of the movement lever
- 18: movement lever
- 20: movement fork
- 22: surrounding border or frame
- 24: internal recess
- 26: fabric or meshwork, preferably elasticized fabric or meshwork
- 28: non-slip means
- 30: straight section of the movement fork
- 32: hinges or strips of material
- 34: mechanical fixing means, preferably screw or rivet
- 36: gripping portion, preferably gripping handle
- 38: edge of the frame or surrounding border
- 40: articulation
- P: plane of extension of the device base, preferably horizontal plane
- R1: rotation axis, preferably first or single rotation axis
- R2: rotation axis of, preferably second rotation axis
- V1: first direction, preferably clockwise direction
- V2: second direction, preferably anti-clockwise direction

## Claims

1. Retaining device (1) comprising:
(a) a device base (2) comprising a first surface (4) and a second surface (6), said first surface (4) and said second surface (6) being separated through a thickness (8) of said device base (2);
(b) a retaining element (10), fixed to the device base (2) movably between a first position in which the retaining element (10) is in the proximity of, or in contact with, the second surface (6), and at least one second position in which the retaining element (10) is at least partly spaced from the device base (2);
wherein the retaining element (10) delimits with the device base (2) a space (12) for receiving one or more items and - in the second position - delimits with the device base (2) an opening (14) for placing said one or more items on the second surface (16);
(c) means for returning the retaining element (10) from the second position towards the first position by means of an elastic force and/or weight force.

2. Retaining device (1) according to the preceding claim, wherein:
the returning means are mechanically arranged between the retaining element (10) and the device base (2) so as to exert - preferably by means of traction - said elastic force; and/or
the returning means comprise at least part of the weight force of the retaining element (10).

3. Retaining device (1) according to any one of the preceding claims, wherein the retaining element (10) is fixed to the device base (2) rotatably about at least one rotation axis (R1; R1, R2) between said first position and said second position, and wherein:
said retaining element (10) is hinged with the device base (2) about a single rotation axis (R1); or
said retaining device (1) comprises at least one movement lever (16, 18) hinged at a first end (16a) with the retaining element (10) about a first rotation axis (R1) and hinged at a second end (16b), opposite to said first end (16a), with the device base (2) about a second rotation axis (R2).

4. Retaining device (1) according to the preceding claim, comprising a pair of movement levers (16, 18) located at opposite ends of the retaining element (10) and mechanically joined together so as to form a movement fork (20).

5. Retaining device (1) according to any one of the preceding claims, wherein the device base (2) extends in a substantially horizontal plane (P) and wherein the retaining element (10) is movable along a direction perpendicular to said plane (P).

6. Retaining device (1) according to any one of the preceding claims, wherein the retaining element (10) comprises:
a frame or a surrounding border (22) which circumscribes at least partly an internal recess (24); and
a fabric or a meshwork (26) connected to the frame or surrounding border (22) so as to extend at least partly across the internal recess (24), said fabric or said meshwork being loosely arranged so as to hang at least partly outside of the internal recess (24) when the retaining element (10) is in the second position.

7. Retaining device (1) according to any one of the preceding claims, wherein at least part of the first surface (4) comprises non-slip means (28) chosen from the group consisting of: alternating surface peaks and troughs, a plurality of hooks or mini-hooks, at least one releasable adhesive substance, an electrostatic charge, one or more suction cups, one or more materials with a sufficiently high static coefficient of friction, and combinations thereof.

8. Retaining device (1) according to any one of the preceding claims, wherein the device base (2) is devoid of shoulders which laterally delimit the receiving space (12).

9. Retaining device (1) according to any one of the preceding claims, wherein the first position of the retaining element (10) is a flattened or two-dimensional position, and wherein the second position of the retaining element (10) is an expanded or three-dimensional position.

10. Assembly comprising:
a motorized vehicle which comprises a bottom surface which delimits at the bottom a vehicle compartment, preferably wherein said vehicle compartment is a luggage compartment;
a retaining device (1) according to any one of the preceding claims, placed inside the vehicle compartment with the first surface (4) resting on the bottom surface;
the retaining device (1) being preferably extractable from the vehicle compartment.
